# EUROPÄISCHE PATENTSCHRIFT

(11) **EP 1 153 220 B1**
(45) Veröffentlichungstag und Bekanntmachung des Hinweises auf die Patenterteilung: **20.11.2002**
(21) Anmeldenummer: 00901012.5
(22) Anmeldetag: 28.01.2000
(51) Int. Cl.: F16B 7/04, F16B 12/32

(54) **VORRICHTUNG ZUM VERBINDEN VON ZWEI BAUTEILEN, DEREN VERWENDUNG UND ENTSPRECHENDE KONSTRUKTIONEN**
DEVICE FOR CONNECTING TWO COMPONENTS, USE THEREOF AND CORRESPONDING CONSTRUCTIONS
DISPOSITIF PERMETTANT DE RELIER DEUX PARTIES STRUCTURALES, UTILISATION DUDIT DISPOSITIF ET CONSTRUCTIONS CORRESPONDANTES

(30) Priorität: 16.02.1999 CH 28899
(43) Veröffentlichungstag der Anmeldung: 14.11.2001
(73) Patentinhaber: Möbelfabrik Zehnder AG, 8840 Einsiedeln (CH)
(72) Erfinder: ZEHNDER, Felix, CH-8806 Bäch (CH); SCHUMACHER, Markus, D-8841 Gross (CH)
(74) Vertreter: EGLI-EUROPEAN PATENT ATTORNEYS
(86) Internationale Anmeldenummer: CH0000039
(87) Internationale Veröffentlichungsnummer: WO00049298

(56) Entgegenhaltungen:
- DE-A- 3 047 642
- DE-A- 4 336 796
- FR-A- 2 424 434
- US-A- 3 672 710
- US-A- 5 768 845

## Beschreibung

Die Erfindung betrifft - gemäss dem Oberbegriff des unabhängigen Anspruchs 1 - eine Vorrichtung zum Verbinden von zwei Bauteilen, insbesondere von zwei Möbelteilen, welche ein Gehäuse umfasst, das zumindest zum Teil in einem ersten Bauteil anordenbar ist und dort unbeweglich festsitzt, wobei die Vorrichtung zudem eine linear verschiebbare, in sich starr ausgebildete Zugzange umfasst, die - zum Eingehen einer lösbaren Verbindung mit einem Befestigungselement, das an einem zweiten Bauteil angeordnet ist, bzw. in dieses eingreift - eine erste Aufnahmestelle und - zum Eingehen einer lösbaren Verbindung mit dem Gehäuse - eine zweite Aufnahmestelle umfasst.

Vorrichtungen zum Verbinden von Bauteilen in der Möbelbranche, im Messe- bzw. Standbau, im Ladenbau, aber auch im Hochbau (z.B. im Fertighausbau), im Containerbau etc. sind im Stand der Technik seit langem bekannt.

Insbesondere im Möbelbau lassen sich grundsätzlich zwei Kategorien von solchen Vorrichtungen beschreiben, welche sinngemäss auch für die anderen Anwendungsgebiete gelten:

Eine erste Kategorie ist dadurch gekennzeichnet, dass Bolzen in ein erstes Möbelteil eingeschraubt werden. Diese Bolzen stehen dann - wie Dübel - im Wesentlichen senkrecht und weit über die Oberfläche des ersten Möbelteils heraus, so dass einerseits ein zweites Möbelteil, welches entsprechende Bohrungen an der Stirnseite aufweist, in im Wesentlichen paralleler Richtung zu diesen Bolzen aufgesteckt werden muss. Andrerseits könnte auch das erste Möbelteil in im Wesentlichen paralleler Richtung zu diesen Bolzen in das zweite Möbelteil eingeschoben werden. Zumeist wird ein Drehverschluss verwendet, um den Bolzen mittels eines Exzenters anzuziehen und damit die beiden Möbelstücke kraftschlüssig zu verbinden. Zum Beispiel das nachträgliche Einbauen von Zwischenböden in Schränken ist bei der Verwendung von Vorrichtungen zum Verbinden von Möbelteilen gemäss dieser ersten Kategorie aus rein geometrischen Gründen nicht möglich, weil die Bolzen und Dübel nicht in die dafür vorgesehenen Bohrungen eingeführt werden können. Die erwähnten Exzenter-Drehverschlüsse ermöglichen eine kraftschlüssige Verbindung mit einer Kraft von bis ca. 1000 N, welche als ungenügend für die Befestigung von Zwischenböden betrachtet wird. Es wird oft beobachtet, dass diese Exzenter-Drehverschlüsse einen Anzugsweg von etwa 2.5 mm für die Verbindung aufweisen, dass aber der effektiv kraftschlüssige Anzugsweg nur einen Bruchteil davon ausmacht und typischerweise etwa 0.5 mm beträgt. Oft werden solche Exzenter-Drehverschlüsse direkt in einer Bohrung im Holz des zweiten Möbelteils versenkt, wodurch sich beim Anziehen der Verbindung unerwünscht grosse Reibungsverluste ergeben können.

Eine zweite Kategorie ist dadurch gekennzeichnet, dass Bolzen in ein erstes Möbelteil eingeschraubt werden. Diese Bolzen stehen dann ebenfalls im Wesentlichen senkrecht, aber nur wenig über die Oberfläche des Möbelteils heraus. Ein Gehäuse, welches sich zumindest teilweise im zweiten Möbelteil befindet, weist einen Einlaufschlitz auf, so dass das zweite Möbelteil in im Wesentlichen senkrechter Richtung zu diesen Bolzen aufgeschoben werden kann. Das nachträgliche Einbauen von Zwischenböden in Schränken ist bei der Verwendung von Vorrichtungen zum Verbinden von Möbelteilen gemäss dieser zweiten Kategorie zwar möglich, doch wird normalerweise ebenfalls ein Exzenter-Drehverschluss verwendet, um den Bolzen anzuziehen. Wie bereits ausgeführt, genügt aber die Kraft, die mit solchen Exzenter-Drehverschlüssen erreicht werden nicht, um Zwischenböden, welche zum Tragen von Lasten ausgebildet sind, zuverlässig zu tragen. Ein zusätzlicher Nachteil kann darin gesehen werden, dass - wegen der nur wenig herausstehenden und zumeist dünnen Bolzen - zusätzliche Dübel eingesetzt werden müssen, um die notwendige Stabilität zu gewährleisten. Dann können aber Zwischenböden in Schrankwänden nicht mehr nachträglich eingebaut werden. Dickere Bolzen würden aber massivere Konstruktionen der Gehäuse bedingen, so dass deren zumindest zum Teil versenkter bzw. unsichtbarer Einbau in Frage gestellt sein könnte.

Bei beiden Lösungskategorien im Stand der Technik reichen die Kräfte der Verbindungen nicht aus, um bei offener Bauweise - das heisst ohne zusätzliche Diagonalstreben, Wandfüllungen und dergleichen - eine ausreichend hohe Diagonalfestigkeit der verbundenen Bauteile zu gewährleisten. Dies gilt insbesondere für Möbel bzw. Regale zur Aufnahme von Büchern und Akten, aber auch zur Aufnahme von Behältern mit schwerer Füllung, wie Werkzeuge, Metallteile und dergleichen.

Eine gattungsgemässe Vorrichtung ist aus US 3,672,710 bekannt und offenbart alle Merkmale des Oberbegriffs von Anspruch 1 Diese Vorrichtung erhöht zwar die Kraft zum Verbinden von zwei Bauteilen, sie erscheint jedoch für den nachträglichen Einbau von Zwischenböden nicht geeignet.

Der vorliegenden Erfindung liegt die Aufgabe zu Grunde, eine Vorrichtung zum Verbinden von zwei Bauteilen, insbesondere von zwei Möbelteilen vorzuschlagen, welche z.B. den nachträglichen Einbau von Zwischenböden in Schränken und anderen Konstruktionen und eine grössere Kraft zum Verbinden von solchen Bauteilen ermöglicht.

Diese Aufgabe wird erfindungsgemäss durch die Merkmale des unabhängigen Anspruchs 1 gelöst. Weiterführende Merkmale der Erfindung ergeben sich aus den abhängigen Ansprüchen. Die beigefügten Figuren illustrieren schematisch und ohne dass der Schutzbereich der Ansprüche in irgend einer Weise eingeschränkt werden soll, eine bevorzugte Ausführungsform der erfindungsgemässe Vorrichtung in einem Längsschnitt. Dabei zeigt:
- Fig. 1: das Einschieben eines als Bolzen gefertigten Befestigungselements in die Zugzange;
- Fig. 2: das Einschieben eines als Bolzen gefertigten Befestigungselements zusammen mit der Zugzange in das Gehäuse;
- Fig. 3: das Lösen bzw. das Anziehen der Stellschraube, wodurch die Zugzange freigegeben bzw. ins Gehäuse gezogen wird;
- Fig. 4: das Festziehen der Stellschraube, welche über die schiefe Ebene der Zugzange wirkt;
- Fig. 5: das Anordnen eines Zapfens, der sich im Wesentlichen rechtwinklig zur Verschieberichtung der Zugzange erstreckt, am Gehäuse;
- Fig. 6: Grundrissdarstellung von Fig. 5 mit zentrierender Vertiefung in der Öffnung der Zugstange und mit Schraubbolzen-Nutenstein-Kombination.

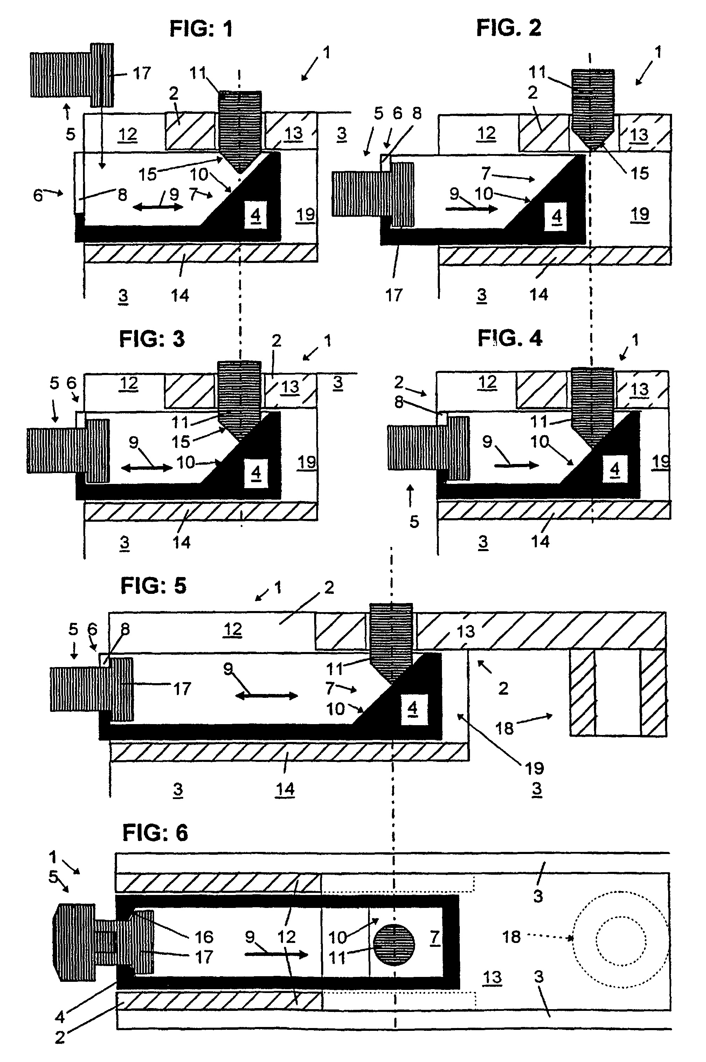

Fig. 1 zeigt eine erfindungsgemässe Vorrichtung 1 zum Verbinden von zwei Bauteilen, insbesondere von zwei Möbelteilen, welche ein Gehäuse 2 umfasst, das zumindest zum Teil in einem ersten Bauteil 3 (nur teilweise dargestellt) anordenbar ist und dort unbeweglich festsitzt, wobei die Vorrichtung 1 zudem eine linear verschiebbare, in sich starr ausgebildete Zugzange 4 umfasst, die - zum Eingehen einer lösbaren Verbindung mit einem Befestigungselement 5, das an einem zweiten Bauteil (nicht gezeigt) angeordnet ist, bzw. in dieses eingreift - eine erste Aufnahmestelle 6 und - zum Eingehen einer lösbaren Verbindung mit dem Gehäuse 2 - eine zweite Aufnahmestelle 7 umfasst. Die erste Aufnahmestelle umfasst eine schlitzartige Öffnung 8, in welche ein Teil des Befestigungselements 5, der sich im Wesentlichen parallel zur Verschieberichtung 9 der Zugzange 4 erstreckt, in im Wesentlichen rechtwinkliger Richtung zu dieser Verschieberichtung 9 eingeschoben werden kann. Die zweite Aufnahmestelle 6 ist als schiefe Ebene 10 ausgebildet, mit welcher eine in das Gehäuse 2 einsetzbare Stellschraube 11 so zusammenwirkt, dass die Zugzange 4 durch das Anziehen der Stellschraube 11 in das Gehäuse 2 gezogen wird.

Vorzugsweise ist die Zugzange 4 im Gehäuse 2 in der Verschieberichtung 9 geführt. Dies ist hier so gelöst, dass die seitlichen Wandteile 12 des Gehäuses 2 der Zugzange 4 gerade genügend Spiel lassen, dass diese zwischen den beiden Wandteilen 12 gleiten kann. Ein Schmiermittel kann dieses Gleiten noch unterstützen. Die Decke 13 des Gehäuses 2, in welche vorzugsweise die Stellschraube 11 eingesetzt ist, bildet zusammen mit den beiden seitlichen Wandteilen 12 und dem Boden 14 einen Kanal 19, in welchem die Zugzange in ihrer Verschieberichtung 9 gleitend geführt ist.

Die Zugzange 4 ist hier ganz aus dem Gehäuse herausnehmbar ausgebildet. Dies hat den Vorteil, dass - sollten die schiefe Ebene 10 und/oder die schlitzartige Öffnung 8 Abnützungserscheinungen zeigen - die Zugzange 4 einfach ersetzt werden kann. Vorzugsweise ist auch die Stellschraube herausnehmbar ausgebildet, damit auch diese, falls ihr Konus 15 abgenützt oder sonstwie beschädigt ist, einfach ersetzt werden kann.

Die schlitzartige Öffnung 8 in der ersten Aufnahmestelle 6 der Zugzange 4 umfasst vorzugsweise eine Vertiefung 16 (vgl. Fig. 6), welche den Teil 17 bzw. Bolzen 17 des Befestigungselements 5, der sich im Wesentlichen parallel zur Verschieberichtung 9 der Zugzange 4 erstreckt, zentriert. Damit wird auch verhindert, dass die Zugzange 4 vom Teil 17 bzw. Bolzen 17 des Befestigungselements 5, falls diese nur mit wenig Zugkraft angezogen ist, einfach nach unten wegrutschen kann. Eine alternative Montage sieht allerdings vor, dass die Vorrichtung 1 zum Verbinden von zwei Bauteilen relativ zur Verschieberichtung 9 (Doppelpfeil) und gegenüber der Darstellung in Fig. 1 um 90° oder 180° gedreht ist. Auch beliebige Zwischenstellungen können vorgesehen werden. Dies hat den Vorteil, dass auch gegenüber der Horizontalen geneigte Zwischenböden oder Tablare zwischen schon bestehende Seitenwände eingebaut werden können. Besonders im Laden- und Ausstellungs- bzw. Messebau ist dies zum Präsentieren von Ausstellungsgütern oft erwünscht.

Während Fig. 1 das Einschieben eines als Bolzen gefertigten Befestigungselements 5 in die Zugzange 4 in im Wesentlichen vertikaler Richtung (Pfeil) darstellt, kann selbstverständlich beim Zusammenbau der Bauteile auch das Gehäuse 2 in der Gegenrichtung dem schon exakt vormontierten Bolzen genähert werden. Während der Montage in dieser Art ist es von Vorteil, wenn die Stellschraube 11 etwas in das Gehäuse 2 eingedreht ist, so dass die Zugzange 4 nicht ganz herausgenommen werden kann. Diese kann damit auch nicht unbeabsichtigt aus dem Gehäuse 2 herausfallen.

Dagegen ist in Fig. 2 ein als Bolzen gefertigtes Befestigungselement 5, welches bereits an einem zweiten Bauteil befestigt worden ist bzw. einen Teil desselben darstellt, schon in die schlitzartige Öffnung 8 der Zugzange 4 eingesetzt und wird mit dieser zusammen in das Gehäuse 2 in im wesentlichen horizontaler Richtung eingeschoben. Dies entspricht dem seitlichen Einfahren der Verbindungselemente bzw. der Vorrichtung 1 zum Verbinden von zwei Bauteilen in einen Grundkörper (Pfeil). Die Stellschraube 11 wurde zu diesem Zweck so weit herausgedreht, dass sie das Einschieben der Zugzange 4 nicht behindert.

Fig. 3 und Fig. 5 zeigen das Lösen bzw. das Anziehen der Stellschraube 11, wodurch die Zugzange 4 freigegeben bzw. ins Gehäuse 2 gezogen wird (mit Doppelpfeil dargestellt).

Fig. 4 zeigt das Festziehen der Stellschraube 11, welche über die schiefe Ebene 10 der Zugzange 4 wirkt, so dass die Zugzange 4 in das Gehäuse 2 gezogen wird (mit Pfeil dargestellt). Eine Stellschraube 11 kann z.B. als Madenschraube mit Inbusschlüsselsitz und stirnseitigem Konus 15 ausgebildet sein. Andere Schraubenformen (mit oder ohne Kopf) kommen aber auch in Frage. Typischerweise ist die schiefe Ebene so ausgebildet, dass sie einen Anzugsweg von etwa 3 mm zulässt. Auf diesem ganzen Anzugsweg besteht ein Kraftschluss zwischen den zu verbindenden Bauteilen über das Gehäuse 2, die Stellschraube 11, die Zugzange 4 und das Befestigungselement 5 mit einer Kraft von bis zu 2500 N. Je nach der gegenseitigen Position von Stellschraube 11 und Zugzange 4 kann die gewünschte Endlage so festgelegt werden, dass - nach dem Festziehen der Vorrichtung 1 zum Verbinden von zwei Bauteilen - der Konus 15 der Stellschraube 11 das Ende der schiefen Ebene 10 der Zugzange 4 nicht erreicht.

In einer nicht dargestellten Ausführungsform der Erfindung umfasst die Vorrichtung zwei oder mehr Zugzangen 4 mit unterschiedlicher Steigung der schiefen Ebene 10 und/oder mit unterschiedlicher Zugzangenlänge, so dass eine Grobabstimmung der Endlage der Zugzange mit der Wahl der entsprechenden Zugzangenlänge und die Wahl der Kraft für die kraftschlüssige Verbindung zwischen zwei Bauelementen durch die Wahl der entsprechenden Steigung der schiefen Ebene 10 erfolgt. Die Feinabstimmung ergibt sich aus der Lage der schiefen Ebene 10.

In einer weiteren, nicht dargestellten Ausführungsform der Erfindung umfasst das Gehäuse zwei oder mehr Löcher für das Einsetzen zweier oder mehrerer Stellschrauben 11, woraus sich unter Anderen folgende Möglichkeiten ergeben:
- Eine Grobabstimmung der Endlage der Zugzange 4 erfolgt mit der Wahl des entsprechenden Schraubenloches. Die Feinabstimmung ergibt sich dann wiederum aus der Lage der schiefen Ebene 10.
- Um die Kraft für die kraftschlüssige Verbindung weiter zu erhöhen, werden zwei oder mehr Stellschrauben 11 in das Gehäuse 2 eingesetzt, so dass jede Stellschraube 11 individuell auf eine grössere, verlängerte schiefe Ebene 10' in einer entsprechend erhöhten Zugzange 4' wirkt.
- Um die Kraft für die kraftschlüssige Verbindung weiter zu erhöhen, werden zwei oder mehr Stellschrauben 11 in das Gehäuse 2 eingesetzt, so dass jede Stellschraube 11 individuell auf zwei oder mehrere einzelne schiefe Ebenen 10'', 10''' etc., welche in eine längere Zugzange 4'' eingearbeitet sind, wirkt.

Fig. 5 zeigt das Anordnen eines Zapfens 18 am Gehäuse 2. Der Zapfen 18 erstreckt sich im Wesentlichen rechtwinklig zur Verschieberichtung 9 der Zugzange 4 und hat die Aufgabe, den grössten Teil der Zugkräfte auf das erste Bauteil 3, in dem das Gehäuse 2 zumindest zum Teil eingelassen ist, zu übertragen. Entsprechend der zu erwartenden Zugkraft kann der Zapfen 18 verlängert werden oder es werden mehrere Zapfen am selben Gehäuse 2 vorgesehen. Die Verbindung zwischen Zapfen 18 und Gehäuse 2 wird vorzugsweise mittels einer verlängerten Gehäusedecke 13 bewerkstelligt. Vorzugsweise wird das Gehäuse 2 mit Zapfen 18 einstückig und - wegen der hohen Kräfte - vorzugsweise aus Metall hergestellt. Dabei hat sich ein Zinkdruckguss besonders bewährt. Es kann auch vorgesehen sein, dass einer oder mehrere Zapfen nachträglich mit dem Gehäuse - beispielsweise durch Anschrauben - verbunden werden. Zur Gewichts- und Materialverbrauchsreduktion kann der Zapfen 18 hohl ausgebildet sein.

Fig. 6 zeigt eine schematische Grundrissdarstellung von Fig. 5, wobei die Gehäusedecke 13 mit dem Zapfen 18 in der Aufsicht und die Zugzange mit dem Befestigungselement 5 und den seitlichen Gehäusewandteilen 12 sowie der Stellschraube 11 im Horizontalschnitt dargestellt sind. Die erfindungsgemässe Vorrichtung 1 zum Verbinden von zwei Bauteilen, insbesondere von zwei Möbelteilen, umfasst ein Gehäuse 2, das zumindest zum Teil in einem ersten Bauteil 3 (nur teilweise dargestellt) anordenbar ist und dort unbeweglich festsitzt. In Fig. 6 ist der Teil 17 des Befestigungselements 5, das sich im Wesentlichen parallel zur Verschieberichtung 9 der Zugzange 4 erstreckt, als Gewindebolzen ausgebildet. Dieser Gewindebolzen kann ein Aussengewinde (nicht dargestellt) oder ein Innengewinde aufweisen, mit dem er direkt an einem zweiten Bauteil befestigt werden kann (nicht dargestellt). Das Befestigungselement 5 kann Teil der erfindungsgemässen Vorrichtung 1 und als einteiliger Nutenstein ausgebildet sein (nicht dargestellt).

In Fig. 6 ist eine zweiteilige Schraubenbolzen-Nutenstein-Kombination dargestellt. Zudem ist der Bolzen konisch ausgebildet, so dass er gerade in eine entsprechende Vertiefung 16 in der Öffnung 8 der Zugzange 4 passt und von dieser Vertiefung 16 zentriert wird. Bevorzugt werden Nutensteine mit einer relativ grossen Andruckfläche verwendet. Typischerweise beträgt dabei die Länge der Auflagebereiche der Nutensteine einige cm. Längen von 10 cm haben sich dabei hervorragend bewährt.

Die Bezugszeichen in den einzelnen Figuren entsprechen einander, auch wenn nicht bei allen Figuren auf jedes Bezugszeichen explizit hingewiesen wird.

Als zu den Vorteilen einer bevorzugten Vorrichtung gehörend kann aufgeführt werden:
- Sämtliche Verschleissteile, insbesondere die Zugzange 4, die Stellschraube 11 und allfällige Bolzen sind austauschbar. Die bevorzugte, erfindungsgemässe Vorrichtung umfasst somit keine festen, nicht ersetzbaren und einer Abnützung unterworfenen Teile.
- Nutensteine können als Teil der erfindungsgemässen Vorrichtung ausgebildet sein und eine relativ grosse Andruckfläche aufweisen, so dass sich eine überraschend gute Diagonalsteifigkeit bzw. Diagonalfestigkeit bei Konstruktionen mit offener Bauweise ergibt.
- Die beiden zu verbindenden Bauteile können horizontal und/oder vertikal gegeneinander verschoben bzw. ineinander geschoben werden, bis eine kraftschlüssige Verbindung hergestellt wird.
- Kraftschlüssige Verbindungen zweier Bauteile können mit einer Kraft von bis über 2500 N verwirklicht werden.
- Die dargestellte Vorrichtung 1 zum Verbinden von zwei Bauteilen ermöglicht eine gegenüber dem Stand der Technik schmälere Bauart des Gehäuses 2, so dass Einbaumasse von 14 mm erreicht werden, was gegenüber dem Stand der Technik eine bis um 4 mm schlankere Form der Bauteile ermöglicht.
- Die vorgestellte Kombination mit einem Einbaumass von 14 mm und einer kraftschlüssigen Verbindung mit 2500 N wurde im Stand der Technik der Vorrichtungen zum Verbinden von zwei Bauteilen, insbesondere von zwei Möbelteilen, bisher nicht verwirklicht.

## Patentansprüche

1. Vorrichtung (1) zum Verbinden von zwei Bauteilen, insbesondere von zwei Möbelteilen, welche ein Gehäuse (2) und ein Befestigungselement (5) umfasst, wobei das Gehäuse (2) zumindest zum Teil in einem ersten Bauteil (3) anordenbar ist und dort unbeweglich festsitzt und die Vorrichtung (1) zudem eine in einer Verschieberichtung (9) linear verschiebbare, in sich starr ausgebildete Zugzange (4,4',4'') umfasst, die - zum Eingehen einer lösbaren Verbindung mit dem Befestigungselement (5), das an einem zweiten Bauteil angeordnet ist bzw. in dieses eingreift - eine erste Aufnahmestelle (6) und - zum Eingehen einer lösbaren Verbindung mit dem Gehäuse (2) - eine zweite Aufnahmestelle (7) umfasst, wobei die zweite Aufnahmestelle (7) als schiefe Ebene (10,10', 10'',10''') ausgebildet ist, mit welcher eine in das Gehäuse (2) einsetzbare Stellschraube (11) so zusammenwirkt, dass die Zugzange (4,4',4'') durch das Anziehen der Stellschraube (11) in das Gehäuse (2) gezogen wird, **dadurch gekennzeichnet, dass**
die erste Aufnahmestelle (6) der Zugzange (4,4',4'') eine schlitzartige Öffnung (8) umfasst, in welche ein Teil (17) des sich im Wesentlichen parallel zur Verschieberichtung (9) der Zugzange (4,4',4'') erstreckenden Befestigungselements (5), in im Wesentlichen rechtwinkliger Richtung zu dieser Verschieberichtung (9) eingeschoben werden kann.

2. Vorrichtung nach Anspruch 1, **dadurch gekennzeichnet, dass** die Zugzange (4,4',4'') im Gehäuse (2) in der Verschieberichtung (9) geführt ist.

3. Vorrichtung nach einem der vorhergehenden Ansprüche, **dadurch gekennzeichnet, dass** die Zugzange (4,4',4") ganz aus dem Gehäuse (2) herausnehmbar ist.

4. Vorrichtung nach einem der vorhergehenden Ansprüche, **dadurch gekennzeichnet, dass** die schlitzartige Öffnung (8) in der ersten Aufnahmestelle (6) eine Vertiefung (16) umfasst, welche einen Teil (17) des Befestigungselements (5) zentriert.

5. Vorrichtung nach einem der vorhergehenden Ansprüche, **dadurch gekennzeichnet, dass** der Teil (17) des Befestigungselements (5) als Gewindebolzen ausgebildet ist.

6. Vorrichtung nach einem der vorhergehenden Ansprüche, **dadurch gekennzeichnet, dass** das Befestigungselement (5) als Nutenstein ausgebildet ist.

7. Vorrichtung nach einem der vorhergehenden Ansprüche, **dadurch gekennzeichnet, dass** das Gehäuse (2) einen Zapfen (18) umfasst, der sich im Wesentlichen rechtwinklig zur Verschieberichtung (9) der Zugzange (4,4',4'') erstreckt.

8. Verwendung einer Vorrichtung (1) nach einem oder mehreren der Ansprüche 1 bis 7 zum Verbinden von zwei Bauteilen, insbesondere von zwei Möbelteilen.

9. Konstruktionen, insbesondere Möbel, bei denen Teile durch eine Vorrichtung nach einem oder mehreren der Ansprüche 1 bis 7 verbunden sind.

## Claims

1. A device (1) for connecting two components, in particular two furniture components, comprising a housing (2) and a fastening element (5), wherein the housing (2) at least in part is arrangeable in a first component (3) where it is immovably arranged, and wherein the device (1) further comprises traction pliers (4, 4', 4'') for linear displacement in one displacement direction (9), with said traction pliers (4, 4', 4'') being rigid per se, which, in order to establish a disconnectable connection with said fastening element (5) which is arranged on a second component respectively, which engages said second component, comprise - a first location position (6) and, in order to establish a disconnectable connection with the housing (2), a second location position (7) wherein the second location position (7) is an inclined plane (10, 10', 10'', 10''') with which an adjusting screw (11), insertable in the housing (2), interact in such a way that said traction pliers (4, 4', 4'') are pulled into the housing (2) by tightening of said adjusting screw (11),
**characterised in that**
the first location position (6) of the traction pliers (4, 4', 4'') comprises a slot-like aperture (8) in which a part (17) of the fastening element (5) essentially extending parallel to the displacement direction (9) of the traction pliers (4, 4', 4''), can be inserted in essentially rectangular direction in relation to this displacement direction (9).

2. The device according to claim 1, **characterised in that** the traction pliers (4, 4', 4'') are guided in the housing (2) in the displacement direction (9).

3. The device according to one of the preceding claims, **characterised in that** the traction pliers (4, 4', 4") can be fully removed from the housing (2).

4. The device according to one of the preceding claims, **characterised in that** in the first location position (6) the slot-like aperture (8) comprises an indentation (16) which centres a part (17) of the fastening element (5).

5. The device according to one of the preceding claims, **characterised in that** the part (17) of the fastening element (5) is a threaded bolt.

6. The device according to one of the preceding claims, **characterised in that** the fastening element (5) is a tenon block.

7. The device according to one of the preceding claims, **characterised in that** the housing (2) comprises a tenon (18) which essentially extends at a right angle to the displacement direction (9) of the traction pliers (4, 4', 4").

8. The use of a device (1) according to one or several of claims 1 to 7 for connecting two components, in particular two furniture components.

9. Constructions, in particular, items of furniture, in which components are connected by a device according to one or several of claims 1 to 7.

## Revendications

1. Dispositif (1) permettant de relier deux parties structurales, en particulier deux parties d'un meuble, comprenant un boîtier (2) et un élément de fixation (5), le boîtier (2) pouvant être agencé au moins en partie dans une première partie structurale (3) et y étant bloqué de façon immobile, et le dispositif (1) comprenant en outre une pince de traction (4, 4', 4'') mobile de façon linéaire dans une direction de déplacement (9) et réalisée de façon rigide en soi, qui comprend - pour établir une connexion amovible avec ledit élément de fixation (5) qui est agencé sur une deuxième partie structurale ou vient en prise avec celle-ci - un premier point de réception (6) et - pour établir une connexion amovible avec ledit boîtier (2) - un deuxième point de réception (7), le deuxième point de réception (7) étant réalisé comme un plan incliné (10, 10', 10'', 10''') avec lequel une vis de réglage (11) insérable dans le boîtier (2) coopère de telle sorte que la pince de traction (4, 4', 4'') est rentrée dans le boîtier (2) par le serrage de la vis de réglage (11),
**caractérisé en ce que**
le premier point de réception (6) de la pince de traction (4, 4', 4'') comprend un orifice de type rainure (8) dans lequel on peut insérer une partie (17) de l'élément de fixation (5) s'étendant substantiellement en parallèle à la direction de déplacement (9) de la pince de traction (4, 4', 4''), dans une direction substantiellement perpendiculaire à cette direction de déplacement (9).

2. Dispositif selon la revendication 1, **caractérisé en ce que** la pince de traction (4, 4', 4'') est guidée dans le boîtier (2) dans la direction de déplacement (9).

3. Dispositif selon l'une quelconque des revendications précédentes, **caractérisé en ce que** la pince de traction (4, 4', 4") peut être sortie complètement du boîtier (2).

4. Dispositif selon l'une quelconque des revendications précédentes, **caractérisé en ce que** l'orifice de type rainure (8) comprend dans le premier point de réception (6) un creux (16) qui centre une partie (17) de l'élément de fixation (5).

5. Dispositif selon l'une quelconque des revendications précédentes, **caractérisé en ce que** la partie (17) de l'élément de fixation (5) est réalisée comme un boulon fileté.

6. Dispositif selon l'une quelconque des revendications précédentes, **caractérisé en ce que** l'élément de fixation (5) est réalisé comme un coulis seau.

7. Dispositif selon l'une quelconque des revendications précédentes, **caractérisé en ce que** le boîtier (2) comprend un tenon (18) qui s'étend de façon substantiellement perpendiculaire à la direction de déplacement (9) de la pince de traction (4, 4', 4'').

8. Utilisation d'une dispositif (1) selon l'une quelconque ou plusieurs des revendications 1 à 7 permettant de relier deux parties structurales, en particulier deux parties d'un meuble.

9. Constructions, en particulier des meubles, dans lesquelles des parties sont reliées par un dispositif selon l'une quelconque ou plusieurs des revendications 1 à 7.
